# EUROPÄISCHE PATENTSCHRIFT

(11) **EP 1 880 593 B1**
(45) Veröffentlichungstag und Bekanntmachung des Hinweises auf die Patenterteilung: **14.04.2010**
(21) Anmeldenummer: 07014152.8
(22) Anmeldetag: 19.07.2007
(51) Int. Cl.: A01D 25/04

(54) **Antriebsanordnung eines Rodeaggregates einer Rübenerntemaschine**
Drive assembly for the stubbing device of a beet harvester
Dispositif de commande d'un bâti arracheur d'une récolteuse de betteraves

(30) Priorität: 22.07.2006 DE 102006033948
(43) Veröffentlichungstag der Anmeldung: 23.01.2008
(73) Patentinhaber: Grimme Landmaschinenfabrik GmbH & Co. KG, 49401 Damme (DE)
(72) Erfinder: Kalverkamp, Klemens, D-49401 Damme (DE)
(74) Vertreter: Weeg, Thomas

(56) Entgegenhaltungen:
- EP-A- 0 950 345
- DE-U1-202004 009 320

## Beschreibung

Die Erfindung betrifft eine Antriebsanordnung eines Rodeaggregates einer Rübenerntemaschine gemäß dem Oberbegriff des Anspruchs 1.

Bekannte Rübenerntemaschinen (DD 95 480) sind im Bereich eines V-förmig angeordnete Roderäder aufweisenden Rodeaggregates mit jeweiligen Stirnrad-Zahnrädern als Antrieb versehen. Mit diesen quer zur Fahrtrichtung der Rübenerntemaschine in einem geschlossenen Gehäuseblock angeordneten Getriebeteilen sind mehrere Roderad-Paarungen verbunden, wobei von diesen Paarungen jeweils nur einseitig eines der Roderäder antreibbar ist.

Gemäß DE 32 38 292 A1 ist eine Rübenerntemaschine vorgesehen, deren paarweise zusammenwirkende Roderäder im Bereich eines Getriebegehäuses mit einem einstufigen Kegelradantrieb zusammenwirken. Dabei sind die beiden Kegelradgetriebe jeden Roderad-Paares durch ein jeweils quer zur Fahrtrichtung verlaufendes Kreuzungsgelenk synchronlaufend gekoppelt und so mittels einer einzigen Gelenkwelle sämtliche der in einer Reihenanordnung verbundenen Roderad-Paare antreibbar.

Bei einer Rübenerntemaschine gemäß EP 0 340 858 ist vorgesehen, daß bei einer mehrreihigen Ausführung das Rodeaggregat paarweise gesondert angetriebene Roderad-Paare aufweist. Der Antrieb erfolgt dabei ausgehend von einem Motor mit Abtriebswelle, die über ein jeweiliges Kettengetriebe jeweilige Roderad-Paare antreibt. Das Kettengetriebe wirkt mit schrägverzahnten Stirnrädern zusammen, die die beiden Roderäder gleichzeitig antreiben. Der Aushubspalt wird dabei nur jeweils im Zusammenwirken benachbarter Roderad-Paare gebildet.

Gemäß DE 42 34 207 ist ebenfalls eine mehrreihig arbeitende Rübenerntemaschine mit einem Rodeaggregat versehen, bei dem ein Kegelrad-Winkelgetriebe mit drei Kegelrädern in einem großbauenden Gehäuse verbunden sind und an dessen Abtriebsseite befindliche Roderäder über entsprechende Wellenzapfen antreibbar sind. Diese angetriebenen Roderäder wirken ähnlich EP 0 340 858 auch mit einem jeweiligen nebengeordneten, mitlaufenden und nichtangetriebenen Roderad zusammen, zu dem hin der die Rüben einer Zeile erfassende Aushubspalt erreicht wird. Mit diesem System sind für eine 6-reihige Rodung zwar nur drei Getriebe erforderlich, gleichzeitig wird jedoch durch die jeweils mitlaufenden nichtangetriebenen Roderäder die Leistungsfähigkeit dieser Rübenerntemaschine begrenzt. Insbesondere bei nassem Boden neigen die mitlaufenden Roderäder zu Blockierungen, durch verstärkte Hebelwirkungen der Roderäder auf jeweilige Teile des Winkelgetriebes besteht eine hohe Bruchgefahr und damit ist das System überaus störanfällig. Bei einer Antriebsvorrichtung gemäß EP 0 950 345 A1 wirkt eine horizontale Antriebswelle über eine Stirnrad-Verbindung auf jeweilige Kegelrad-Abtriebe zu den Roderädern hin, wobei dieses System insgesamt instabil und bei hohen Belastungen Bruchgefährdet ist.

Die Erfindung befaßt sich mit dem Problem, eine Antriebsanordnung für das Rodeaggregat einer Rübenerntemaschine so zu gestalten, daß mit deren Getriebe bei geringem technischen Aufwand höhere Aushubleistungen an den Roderädern erreichbar sind und auch bei nassen Böden eine störungssichere Übertragung hoher Antriebsleistungen auf die Roderad-Paare möglich ist.

Die Erfindung löst diese Aufgabe mit einer Antriebsanordnung mit den Merkmalen des Anspruchs 1. Weitere vorteilhafte Ausgestaltungen ergeben sich aus den Ansprüchen 2 bis 15.

Die Antriebsanordnung für das Rodeaggregat ist in erfindungsgemäßer Ausführung so konzipiert, daß die jeweiligen Rodeeinheiten mittels eines an sich bekannten Winkelgetriebes bzw. dessen Gehäusekonstruktion und den zwei Roderädern direkt den Aushubspalt bilden. Dabei sind die am Getriebegehäuse befindlichen Roderäder mittels der Getriebekonfiguration so positioniert, daß die beiden abtriebsseitigen Roderäder unmittelbar dem zentralen Aushubspalt zugeordnet und in dessen Bereich gleichzeitig aktiv drehbar sind.

Bei dieser Antriebskonstruktion sind entsprechend dem Zeilenabstand der Rübenreihen mehrere kompakte Baueinheiten auf dem Rodeaggregat wirksam, wobei diese Rodeeinheiten jeweils durch einzeln pendelnde Aufhängung in der Rodephase eine optimale Anpassung an die jeweilige Rodereihe ermöglichen. Die Roderäder sind belastungsoptimal mit dem Getriebegehäuse verbunden, so daß trotz des von diesem vorgegebenen geringen Einbauraums ein störungssicherer Rodevorgang auch bei schwierigen Böden möglich ist.

Die Stabilität der Rodeeinheiten ist insbesondere dadurch verbessert, daß die im Gehäuse befindlichen Bauteile der endseitig die Roderäder aufnehmenden Kegelrad-Verbindungen mit einer im wesentlichen einstückigen Trageinheit als zentrales Bauteil versehen sind und dieses belastungsoptimal im Getriebegehäuse gelagert wird. Dabei werden die von den Roderädern beim Aushubvorgang erzeugten Gegenkräfte über kurze Hebelwege auf jeweilige Stützlager geführt, so daß Überbelastungen dieser Antriebsanordnung im Bereich des Getriebes vermieden sind und dieses langzeitig einsetzbar ist.

Die aus dem Getriebegehäuse und den beiden seitlichen Roderädern gebildete und im wesentlichen symmetrisch aufgebaute Rodeeinheit kann in der Einbaulage am Rodeaggregat in eine Fünf-Uhr-Stellung positioniert werden, so daß für die beiden an den Flanschen der Trageinheit anliegenden Roderäder ein optimaler Aushubspalt erreicht wird.

Weitere Einzelheiten und vorteilhafte Ausgestaltungen ergeben sich aus der nachfolgenden Beschreibung und der Zeichnung, die ein Ausführungsbeispiel einer erfindungsgemäßen Antriebsanordnung veranschaulicht. In der Zeichnung zeigen:
- Fig. 1: eine Seitenansicht einer Rübenerntemaschine im Bereich eines Rodeaggregats mit in Aushubstellung verlagerbaren Roderädern,
- Fig. 2: eine Vorderansicht des Rodeaggregates im Bereich einer erfindungsgemäß ausgebildeten Rodeeinheit, und
- Fig. 3: eine vergrößerte Schnittdarstellung des Winkelgetriebes der Rodeeinheit gemäß Fig. 2.

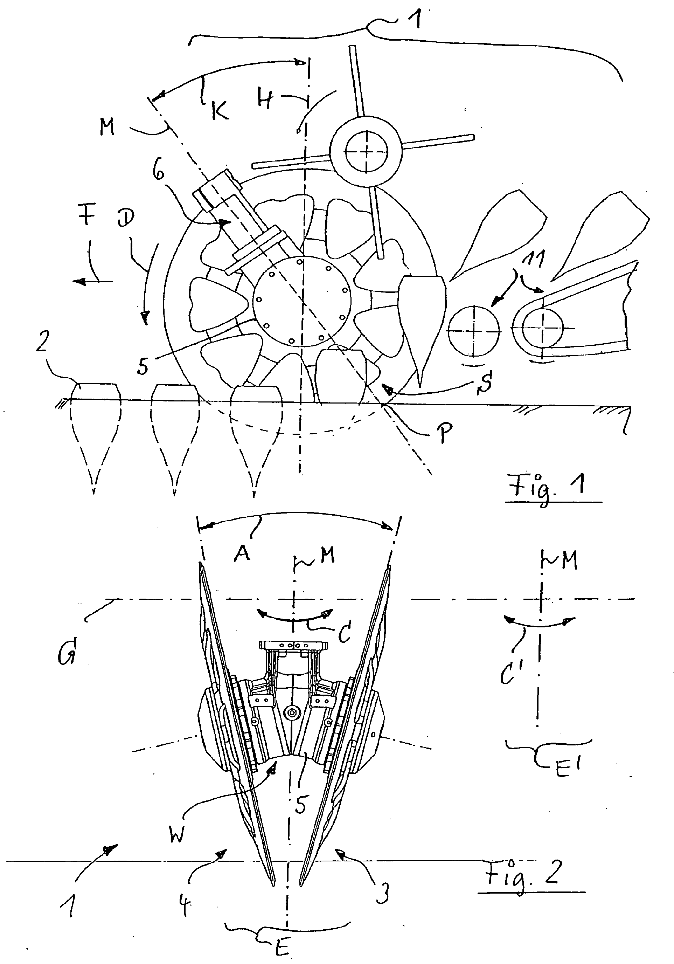

In Fig. 1 ist ein insgesamt mit 1 bezeichnetes Rodeaggregat einer nicht näher dargestellten Rübenerntemaschine schematisch veranschaulicht, wobei eine Antriebsanordnung mit zum Aushub von Erntegut 2 einen Aushubspalt S bildenden Roderad-Paaren 3, 4 vorgesehen ist. Gemäß DE 42 34 207 C2 ist ein allgemein mit W bezeichnetes Winkelgetriebe bekannt, wobei ähnlich den Roderädern 3, 4 in Fig. 2 ein Antrieb wirksam ist. Bei dieser bekannten Konstruktion sind den angetriebenen Roderädern nebengeordnete, nichtangetriebene Roderäder zugeordnet, so daß damit mit weniger Antriebsteilen der Aushubspalt S gebildet werden kann.

Erfindungsgemäß ist eine Antriebsanordnung vorgesehen, bei der das Winkelgetriebe W als Teil einer kompakten Rodeeinheit E (Fig. 2) ausgebildet ist, deren gleichzeitig antreibbare Roderäder 3, 4 beim Aushub des Erntegutes 2 im Bereich des Aushubspaltes S direkt zusammenwirken. Dabei wird der Aushubspalt S mittels der an einem Getriebegehäuse 5 einen Abstand A vorgebenden Einbaulage der Roderäder 3, 4 definiert (Fig. 2).

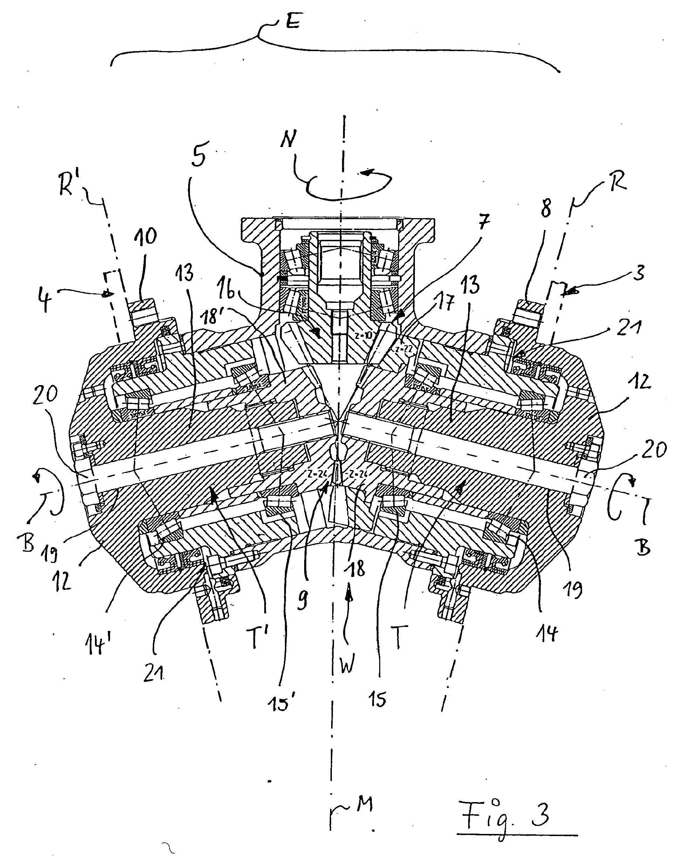

Die Zusammenschau von Fig. 1 und 3 macht dieses Antriebskonzept deutlich, wobei eine zum Getriebegehäuse 5 geführte Antriebswelle 6 (Fig. 1) mittels einer ersten Kegelradverbindung 7 das anderenends an einem ersten Flanschteil 8 gehaltene erste Roderad 3 antreibt. Mittels einer von dieser ersten Kegelradverbindung 7 ausgehenden zweiten Kegelradverbindung 9 wird das anderenends an einem zweiten Flanschteil 10 gehaltene zweite Roderad 4 gleichzeitig angetrieben.

Fig. 2 verdeutlicht, daß die beiden Roderäder 3, 4 an den spitzwinklig und symmetrisch zur Längsmittelebene M des Getriebegehäuses 5 ausgerichteten Flanschteilen 8, 10 anlegbar sind. Diese zumindest eine Rodeeinheit E des Rodeaggregates 1 wird in einer in Einbaulage (Fig. 1) den Aushubspalt S bildenden Kippstellung (Fünf-Uhr-Stellung) mit einer Neigung gemäß einem Winkel K zur Hochachse H so festgelegt, daß zu einem in Drehrichtung D hinteren Aushubpunkt P hin ein das Erntegut 2 optimal erfassender Aufnahmebereich gebildet ist. In Drehrichtung D der Roderäder 3, 4 hinter diesem Punkt P werden die Rüben als Erntegut 2 von jeweiligen Aufnahmeteilen 11 erfaßt und entgegen der Fahrtrichtung F in die nicht näher dargestellte Maschine eingefördert.

Derartige Rübenerntemaschinen weisen in bevorzugter Ausführung mehrreihige, insbesondere 6-reihige, Rodeaggregate 1 auf, wobei dessen sechs Rodeeinheiten E jeweils mit den paarweise aktiven Roderädern 3, 4 versehen sind. In Fig. 2 ist dieses mehrreihige Rode-Prinzip durch eine zur Längsmittelebene M parallele Ebene M' veranschaulicht. Die Abstützung der jeweiligen Rodeeinheiten E, E' erfolgt dabei im Bereich einer allgemein mit einer Stützachse G angedeuteten Halterung. In deren Bereich kann eine "pendelnde" Aufhängung der Rodeeinheiten E, E' vorgesehen sein, wobei die Bewegungsmöglichkeiten mit einer Pfeilrichtung C, C' verdeutlicht sind. Damit kann das System insgesamt beim Rodevorgang optimal der jeweiligen Rübenreihe auch dann folgen, wenn quer zur Fahrtrichtung F Korrekturen erforderlich sind.

Ausgehend von diesem Konzept des den Aushubspalt S vorgebenden Getriebegehäuses 5 als Basisbaugruppe der Rodeeinheit E, E' ist das verwendete Winkelgetriebe W durch eine entsprechende Konstruktion der Kegelradverbindungen 7, 9 an jeweilige beim Rodevorgang auftretende Kräfte angepaßt, so daß mit einer erhöhten Stabilität der Einzelteile Beschädigungen vermieden werden und die Rübenerntemaschine ohne Unterbrechungen einsetzbar ist.

Die Schnittdarstellung gemäß Fig. 3 verdeutlicht, daß das erfindungsgemäße Winkelgetriebe W jeweils im Bereich zwischen den Kegelradverbindungen 7, 9 und den das Roderad 3, 4 aufnehmenden Flanschteilen 8, 10 mit einer im wesentlichen einstückigen und im Innenraum des Getriebegehäuses 5 drehbar gelagerten Trageinheit T, T' versehen ist. In Ansehung des im wesentlichen spiegelbildlichen Aufbaus des Winkelgetriebes W zur Längsmittelebene M sind im Bereich beider Kegelradverbindungen 7, 9 auch im wesentlichen spiegelbildliche Trageinheiten T, T' vorgesehen.

Die Schnittdarstellung gemäß Fig. 3 zeigt, daß bei der Trageinheit T, T' ein mit dem Getriebegehäuse 5 verbindbarer Kappenteil 12 und ein die jeweilige innenliegende Kegelradverbindung 7, 9 aufweisender Tragzapfen 13 als einstückiger Körper geformt sind. Damit weist diese tragende Baugruppe eine gleichmäßige und kerbwirkungsfreie Kontur auf, mit der die Bruchgefahr wesentlich reduziert ist. Die Abmessungen dieser Bauteile sind in Bezug auf das Gehäuse 5 so abgestimmt, daß der den Hubspalt S vorgebende und durch spitzwinklig verlaufende Anlageebenen R, R' gekennzeichnete Abstand A der beiden Roderäder 3, 4 als ein maximaler Stützabstand zwischen den beiden Trageinheiten T, T' definiert ist.

Ausgehend von den beiden Kegelradverbindungen 7, 9 weisen die beiden Trageinheiten T, T' jeweils zumindest zwei von der Längsmittelebene M aus in Richtung des Tragzapfens 13 beabstandete Stützlager 14, 15 auf. Zur optimalen Kraftaufnahme ist die erfindungsgemäße Konstruktion so ausgelegt, daß das jeweilige mit der Trageinheit T, T' verbundene Roderad 3, 4 mit geringem axialen Abstand zum äußeren der beiden Stützlager 15 festlegbar ist, so daß am Roderad 3, 4 wirksame Schub- und Druckkräfte weitgehend ohne Kippmoment in den Stützlagern 14, 15 aufnehmbar sind. Denkbar ist, diese Konstruktion auch so auszuführen, daß das jeweils radial an der Trageinheit T, T' abgestützte Roderad 3, 4 in axialer Richtung (entsprechend einer Längsachse B) zwischen den beiden Stützlagern 14, 15 festgelegt wird und damit die dynamische Belastbarkeit des Systems verbessert ist.

Die Roderäder 3, 4 weisen mittels der optimierten Stützverbindung am Flanschteil 8, 10 bzw. der Trageinheit T, T' eine insgesamt stabile Einbaulage auf, so daß auch die Rodungskräfte bei nassen Böden durch das Winkelgetriebe W insgesamt langzeitstabil aufnehmbar sind. In zweckmäßiger Ausführung ist dazu die Trageinheit T, T' im Bereich des Kappenteils 12 jeweils mit einem einstückig geformten Flanschteil 8, 10 versehen, an dem das jeweilige Roderad 3, 4 mit geringem Aufwand über Schraubverbindungen lösbar gehalten ist.

Das spiegelbildlich aufgebaute Winkelgetriebe W wirkt antriebsseitig mit einem nicht näher dargestellten Antriebszapfen der Antriebswelle 6 (Fig. 1) zusammen, die im Bereich eines Antriebskegelrades 16 in das Getriebegehäuse 5 einmündet. Ausgehend von dieser die Antriebsbewegung (Pfeil N) aufnehmenden ersten Kegelradverbindung 7 ist zur ersten Trageinheit T hin ein erstes Kegelrad 17 vorgesehen und radial versetzt zu diesem ist eine die zweite Kegelradverbindung 9 zum zweiten Roderad 4 hin bildendes zweites Kegelrad 18 angeordnet, das mit dem Kegelrad 18' der Trageinheit T' gepaart ist. Mit diesem Aufbau der Kegelräder 17, 18, 18' ist eine besonders kompakte Ausführung des Winkelgetriebes W erreicht und der zur Bildung des Aushubspaltes S erforderliche Abstand der Roderäder 3, 4 auch mit dem Gehäuse 5 gewährleistet.

Für eine einfache Montage der Antriebsanordnung ist die Trageinheit T, T' jeweils mit einer den Kappenteil 12 und den Tragzapfen 13 zentral durchgreifenden Durchlaßöffnung 19 versehen. In dieser Durchlaßöffnung 19 verläuft ein das jeweilige innere Kegelrad 18, 18' und weitere nicht näher beschriebene Stützbauteile erfassendes Spannelement 20, insbesondere in Form einer gesicherten Spannschraube.

Zur Abdichtung des Systems bzw. des Innenraums des Gehäuses 5 wird das zu diesem hin eine entsprechende Aufnahme- und Verbindungskontur (Fig. 3) aufweisende Kappenteil 12 genutzt. Dabei sind im Bereich des Flanschteiles 8, 10 innenseitig zum Tragzapfen 13 hin jeweilige Labyrinth-Dichtungen 21 vorgesehen. Im Bereich dieser Dichtungen 21 kann auch eine durch eine nicht näher dargestellte Förderpumpe bedienbare Druckschmierung vorgesehen sein, so daß der die Dichtungen 21 aufweisende Spaltbereich zwischen Trageinheit T und Getriebegehäuse 5 durch auspreßbares Schmiermittel vor Verschmutzungen geschützt werden kann.

## Patentansprüche

1. Antriebsanordnung eines Rodeaggregates einer Rübenerntemaschine, mit zum Aushub des Erntegutes (2) einen Aushubspalt (S) bildenden Roderad-Paaren (3, 4), wobei zumindest eines der Roderäder mittels eines mehrere in einem Getriebegehäuse (5) befindliche Kegelräder (16, 17, 18) aufweisenden und durch eine Antriebswelle (6) betätigten Winkelgetriebes (W) drehbar ist, wobei das Winkelgetriebe (W) als Teil einer Rodeeinheit (E, E') ausgebildet ist, deren beim Aushub des Erntegutes (2) im Bereich des Aushubspaltes (S) zusammenwirkende Roderäder (3, 4) gleichzeitig antreibbar sind, **dadurch gekennzeichnet, daß** die unmittelbar zum Getriebegehäuse (5) geführte Antriebswelle (6) mittels einer ersten Kegelradverbindung (7) ein anderenends an einem ersten Flanschteil (8) gehaltenes erstes Roderad (3) und mittels einer von dieser ersten Kegelradverbindung (7) ausgehenden zweiten Kegelradverbindung (9) ein anderenends an einem zweiten Flanschteil (10) gehaltenes zweites Roderad (4) antreibt, derart, daß mit dieser einen Abstand (A) der Roderäder (3, 4) vorgebenden Einbaulage der Aushubspalt (S) definierbar ist.

2. Antriebsanordnung nach Anspruch 1, **dadurch gekennzeichnet, daß** die beiden Roderäder (3, 4) an spitzwinklig und symmetrisch zur Längsmittelebene (M) des Getriebegehäuses (5) ausgerichteten Flanschteilen (8, 10) anlegbar sind und diese zumindest eine Rodeeinheit (E) in einer in Einbaulage den Aushubspalt (S) bildenden Kippstellung (K) am Rodeaggregat (1) festlegbar ist.

3. Antriebsanordnung nach Anspruch 1 oder 2, **dadurch gekennzeichnet, daß** die Rübenerntemaschine ein mehrreihiges, vorzugsweise 6-reihiges, Rodeaggregat (1) aufweist, dessen sechs Rodeeinheiten (E, E') jeweils mit den paarweise aktiven Roderädern (3, 4) versehen sind.

4. Antriebsanordnung nach einem der Ansprüche 1 bis 3, **dadurch gekennzeichnet, daß** das Winkelgetriebe (W) der Rodeeinheit (E) jeweils im Bereich zwischen der Kegelradverbindung (7, 9) und dem das Roderad (3, 4) aufnehmenden Flanschteil (8, 10) mit einer im wesentlichen einstückigen und im Innenraum des Getriebegehäuses (5) drehbar gelagerten Trageinheit (T, T') versehen ist.

5. Antriebsanordnung nach Anspruch 4, **dadurch gekennzeichnet, daß** bei der Trageinheit (T, T') ein mit dem Getriebegehäuse (5) verbindbarer Kappenteil (12) und ein die jeweilige innenliegende Kegelradverbindung (7, 8) aufweisender Tragzapfen (13) als einstückiger Körper geformt sind.

6. Antriebsanordnung nach Anspruch 4 oder 5, **dadurch gekennzeichnet, daß** der den Aushubspalt (S) vorgebende Abstand (A) der beiden Roderäder (3, 4) als ein maximaler Stützabstand zwischen den beiden Trageinheiten (T, T') definiert ist.

7. Antriebsanordnung nach einem der Ansprüche 4 bis 6, **dadurch gekennzeichnet, daß** die Trageinheit (T, T') zumindest zwei in Richtung des Tragzapfens (13) beabstandete Stützlager (14, 15; 14', 15') aufweist.

8. Antriebsanordnung nach einem der Ansprüche 4 bis 7, **dadurch gekennzeichnet, daß** das jeweilige mit der Trageinheit (T, T') verbundene Roderad (3, 4) mit geringem axialen Abstand zum äußeren der beiden Stützlager (14, 14') festlegbar ist.

9. Antriebsanordnung nach einem der Ansprüche 4 bis 8, **dadurch gekennzeichnet, daß** das jeweils radial an der Trageinheit (T, T') abstützbare Roderad (3, 4) in axialer Richtung (Achse B) zwischen den beiden Stützlagern (14, 15; 14', 15') festlegbar ist, derart, daß dem Roderad (3, 4) mittels des jeweiligen Flanschteils (8, 10) eine stabilisierte Einbaulage vorgebbar ist.

10. Antriebsanordnung nach einem der Ansprüche 4 bis 9, **dadurch gekennzeichnet, daß** die Trageinheit (T, T') im Bereich des Kappenteils (12) mit einem einstückig geformten Flanschteil (8, 10) versehen ist.

11. Antriebsanordnung nach einem der Ansprüche 4 bis 10, **dadurch gekennzeichnet, daß** die beiden auf der jeweiligen Trageinheit (T, T') festlegbaren Roderäder (3, 4) spiegelsymmetrisch zu einer die Drehachse des Antriebszapfens aufweisenden Längsmittelebene (M) des Getriebegehäuses (5) angeordnet sind.

12. Antriebsanordnung nach einem der Ansprüche 4 bis 11, **dadurch gekennzeichnet, daß** die die Antriebsbewegung (N) aufnehmende erste Kegelradverbindung (7) ein erstes Kegelrad (17) aufweist und versetzt zu diesem ein die zweite Kegelradverbindung (9) zum zweiten Roderad (4) bildendes zweites Kegelrad (18) vorgesehen ist, das mit dem auf der Trageinheit (T') befindlichen Kegelrad (18') zusammenwirkt.

13. Antriebsanordnung nach einem der Ansprüche 4 bis 12, **dadurch gekennzeichnet, daß** die Trageinheit (T, T') eine den Kappenteil (12) und den Tragzapfen (13) zentral durchgreifende Durchlaßöffnung (19) aufweist, in der eine das innere Kegelrad (18, 18') erfassendes Spannelement (20) vorgesehen ist.

14. Antriebsanordnung nach einem der Ansprüche 4 bis 13, **dadurch gekennzeichnet, daß** die Trageinheit (T, T') im Bereich des Kappenteils (12) zumindest eine Labyrinth-Dichtung (21) aufweist

15. Antriebsanordnung nach Anspruch 14, **dadurch gekennzeichnet, daß** im Bereich der Dichtungen (21) eine permanente Druckschmierung vorgesehen ist.

## Claims

1. Drive arrangement for a lifting assembly of a beet harvester, having pairs of lifting wheels (3, 4) which form a lifting-out gap (S) for lifting out the crop (2) being harvested, at least one of the lifting wheels being rotatable by means of an angle gearbox (W) which is operated by a drive shaft (6) and which has a plurality of bevel gears (16, 17, 18) situated in a gearbox casing (5), the angle gearbox (W) taking the form of part of a lifting unit (E, E') whose lifting wheels (3, 4), which co-operate in the region of the lifting-out gap (S) when the crop (2) being harvested is being lifted out, can be driven simultaneously, **characterised in that** the drive shaft (6), which runs directly to the gearbox casing (5), drives a first lifting wheel (3) by means of a first connection by bevel gear (7), which first lifting wheel (3) is held at the other end on a first flanged portion (8), and the drive shaft (6) drives a second lifting wheel (4) by means of a second connection by bevel gear (9) which starts from the said first connection by bevel gear (7), which second lifting wheel (4) is held at the other end on a second flanged portion (10), in such a way that the lifting-out gap (S) can be defined by the resulting fitted position which presets a distance (A) between the lifting wheels (3, 4).

2. Drive arrangement according to claim 1, **characterised in that** the two lifting wheels (3, 4) can be fitted to flanged portions (8, 10) which are symmetrically aligned at an acute angle to the longitudinal centre plane (M) of the gearbox casing (5) and the resulting at least one lifting unit (E) can be fastened to the lifting assembly (1) in an inclined position (K) which, in the installed position, creates the lifting-out gap (S).

3. Drive arrangement according to claim 1 or 2, **characterised in that** the beet harvester has a multi-row, and preferably a 6-row, lifting assembly (1) whose six lifting units (E, E') are each provided with the lifting wheels (3, 4) which are active in pairs.

4. Drive arrangement according to one of claims 1 to 3, **characterised in that**, in each of the regions between the connections by bevel gear (7, 9) and the flanged portions (8, 10) which receive the lifting wheels (3, 4), the angle gearbox (W) of the lifting unit (E) is provided with a carrying unit (T, T'), which is substantially in one piece and which is rotatably mounted in the interior of the gearbox casing (5).

5. Drive arrangement according to claim 4, **characterised in that**, in the case of the carrying unit (T, T'), a cap portion (12) which can be connected to the gearbox casing (5) and a supporting stub-shaft (13) which has a given one of the internal connections by bevel gear (7, 8) are formed as a one-piece body.

6. Drive arrangement according to claim 4 or 5, **characterised in that** the distance (A) between the two lifting wheels (3, 4) which presets the lifting-out gap (S) is defined in the form of a maximum distance between the support points provided by the two carrying units (T, T').

7. Drive arrangement according to one of claims 4 to 6, **characterised in that** the carrying unit (T, T') has at least two supporting bearings (14, 15; 14', 15') which are spaced apart in the direction defined by the supporting stub-shaft (13).

8. Drive arrangement according to one of claims 4 to 7, **characterised in that** each lifting wheel (3, 4) which is connected to a carrying unit (T, T') can be fastened in place at a short distance axially from the outer one (14, 14') of the two supporting bearings.

9. Drive arrangement according to one of claims 4 to 8, **characterised in that** each lifting wheel (3, 4), which can be supported radially on a carrying unit (T, T'), can be fastened in place between the two supporting bearings (14, 15; 14' 15') in the axial direction (axis B), in such a way that a stabilised fitted position can be preset for the lifting wheel (3, 4) by means of the given flanged portion (8, 10).

10. Drive arrangement according to one of claims 4 to 9, **characterised in that** the carrying unit (T, T') is provided, in the region of the cap portion (12), with a flanged portion (8, 10) which is formed in one piece.

11. Drive arrangement according to one of claims 4 to 10, **characterised in that** the two lifting wheels (3, 4) which can be fastened to respective carrying units (T, T') are arranged in mirror-image symmetry to a longitudinal centre plane (M) of the gearbox casing (5) which contains the axis of rotation of the drive shaft.

12. Drive arrangement according to one of claims 4 to 11, **characterised in that** the first connection by bevel gear (7) which accepts the driving movement (N) has a first bevel gear (17) and, offset from this latter, there is provided a second bevel gear (18) which forms the second connection by bevel gear (9) to the second lifting wheel (4) and which co-operates with the bevel gear (18') situated on the carrying unit (T').

13. Drive arrangement according to one of claims 4 to 12, **characterised in that** the carrying unit (T, T') has a through-opening (19) which passes through the centres of the cap portion (12) and the supporting stub-shaft (13) and in which a clamping member (20) which takes hold of the inner bevel gear (18, 18') is provided.

14. Drive arrangement according to one of claims 4 to 13, **characterised in that** the carrying unit (T, T') has at least one labyrinth seal (21) in the region of the cap portion (12).

15. Drive arrangement according to claim 14, **characterised in that** a system for permanent pressurised lubrication is provided in the region of the seals (21).

## Revendications

1. Dispositif d'entraînement d'un ensemble arracheur d'une récolteuse de betteraves, comprenant des paires de roues arracheuses (3, 4) formant une fente d'enlèvement (S) pour l'enlèvement de la récolte (2), au moins l'une des roues arracheuses pouvant tourner au moyen d'un engrenage angulaire (W) présentant plusieurs roues coniques (16, 17, 18) se trouvant dans un carter d'engrenages (5) et actionné par un arbre d'entraînement (6), l'engrenage (5) angulaire (W) étant conçu comme partie d'une unité arracheuse (E, E'), dont les roues arracheuses (3, 4) coopérant lors de l'enlèvement de la récolte (2) dans la zone de la fente d'enlèvement (S) peuvent être entraînées simultanément, **caractérisé en ce que** l'arbre d'entraînement (6) guidé directement vers le carter d'engrenages (5) entraîne au moyen d'une première liaison conique (7) une première roue arracheuse (3) maintenue par l'autre extrémité sur une première partie de bride (8) et une seconde roue arracheuse (4) maintenue par l'autre extrémité sur une seconde partie de bride (10) au moyen d'une seconde liaison conique (9) partant de cette première liaison conique (7), de telle sorte que la fente d'enlèvement (S) peut être définie avec cette position de montage prédéfinissant un espacement (A) des roues arracheuses (3, 4).

2. Dispositif de commande selon la revendication 1, **caractérisé en ce que** les deux roues arracheuses (3, 4) peuvent être appliquées sur des parties de bride (8, 10) orientées à angle aigu et de façon symétrique par rapport au plan médian longitudinal (M) du carter d'engrenages (5) et **en ce que** cette ou ces unité(s) arracheuses (E) peut/peuvent être fixée(s) sur l'ensemble arracheur (1) dans une position de basculement (K) formant la fente d'enlèvement (S) dans la position de montage.

3. Dispositif d'entraînement selon la revendication 1 ou 2, **caractérisé en ce que** la récolteuse de betteraves présente un ensemble arracheur (1) à plusieurs rangées, de préférence à 6 rangées, dont les six unités arracheuses (E, E') sont dotées chacune des roues arracheuses (3, 4) actives par paires.

4. Dispositif d'entraînement selon l'une quelconque des revendications 1 à 3, **caractérisé en ce que** l'engrenage angulaire (W) de l'unité arracheuse (E) est doté respectivement dans la zone entre la liaison conique (7, 9) et la partie de bride (8, 10) recevant la roue arracheuse (3, 4) d'une unité porteuse (T, T') essentiellement monobloc et logée de façon rotative dans l'espace intérieur du carter d'engrenages (5).

5. Dispositif d'entraînement selon la revendication 4, **caractérisé en ce que**, sur l'unité porteuse (T, T'), une partie de capot (12) pouvant être reliée au carter d'engrenages (5) et un tourillon porteur (13) présentant la liaison conique (7, 8) intérieure respective sont formés comme un corps monocoque.

6. Dispositif d'entraînement selon la revendication 4 ou 5, **caractérisé en ce que** l'espacement (A), prédéfinissant la fente d'enlèvement (S), des deux roues arracheuses (3, 4) est défini comme un espacement de soutien maximum entre les deux unités porteuses (T, T').

7. Dispositif d'entraînement selon l'une quelconque des revendications 4 à 6, **caractérisé en ce que** l'unité porteuse (T, T') présente au moins deux paliers supports (14, 15 ; 14', 15') espacés en direction du tourillon porteur (13).

8. Dispositif d'entraînement selon l'une quelconque des revendications 4 à 7, **caractérisé en ce que** la roue arracheuse (3, 4) respective reliée à l'unité porteuse (T, T') peut être fixée avec une faible distance axiale par rapport au palier extérieur des deux paliers supports (14, 14').

9. Dispositif d'entraînement selon l'une quelconque des revendications 4 à 8, **caractérisé en ce que** la roue arracheuse (3, 4) pouvant être soutenue respectivement radialement sur l'unité porteuse (T, T') peut être déplacée dans la direction radiale (axe B) entre les deux paliers de soutien (14, 15 ; 14', 15'), de telle sorte qu'une position de montage stabilisée peut être prédéfinie pour la roue arracheuse (3, 4) au moyen de la partie de bride respective (8, 10).

10. Dispositif d'entraînement selon l'une quelconque des revendications 4 à 9, **caractérisé en ce que** l'unité porteuse (T, T') est dotée dans la zone de la partie de capuchon (12) d'une partie de bride (8, 10) formée d'une seule pièce.

11. Dispositif d'entraînement selon l'une quelconque des revendications 4 à 10, **caractérisé en ce que** les deux roues arracheuses (3, 4) pouvant être fixées sur l'unité porteuse (T, T') respective sont disposées de façon symétrique par rapport à un plan médian longitudinal (M), présentant l'axe de rotation du tourillon d'entraînement, du carter d'entraînement (5).

12. Dispositif d'entraînement selon l'une quelconque des revendications 4 à 11, **caractérisé en ce que** la première liaison conique (7) recevant le mouvement d'entraînement (N) présente une première roue conique (17) et une seconde roue conique (18) formant la seconde liaison conique (9) par rapport à la seconde roue arracheuse (4) est prévue de façon décalée par rapport à la première roue conique et coopère avec la roue conique (18') se trouvant sur l'unité porteuse (T').

13. Dispositif d'entraînement selon l'une quelconque des revendications 4 à 12, **caractérisé en ce que** l'unité porteuse (T, T') présente une ouverture de passage (19) pénétrant la partie de capot (12) et le tourillon porteur (13) de façon centrale, ouverture dans laquelle est prévu un élément de serrage (20) saisissant la roue conique (18, 18') intérieure.

14. Dispositif d'entraînement selon l'une quelconque des revendications 4 à 13, **caractérisé en ce que** l'unité porteuse (T, T') présente au moins un joint à labyrinthe (21) dans la zone de la partie de capot (12).

15. Dispositif d'entraînement selon la revendication 14, **caractérisé en ce qu'**un graissage sous pression permanent est prévu dans la zone des joints (21).
